# EUROPEAN PATENT SPECIFICATION

(11) **EP 3 502 585 B1**
(45) Date of publication and mention of the grant of the patent: **10.06.2020**
(21) Application number: 16913504.3
(22) Date of filing: 17.08.2016
(51) Int. Cl.: F25B 1/00, F24H 4/02, F25B 30/02, F25B 47/00

(54) **HEAT PUMP SYSTEM**
WÄRMEPUMPENSYSTEM
SYSTÈME DE POMPE À CHALEUR

(43) Date of publication of application: 26.06.2019
(73) Proprietor: Mitsubishi Electric Corporation, Chiyoda-ku Tokyo 100-8310 (JP)
(72) Inventor: SAWAMURA, Naoki, Tokyo 100-8310 (JP)
(74) Representative: Pfenning, Meinig & Partner mbB
(86) International application number: PCT/JP2016/074024
(87) International publication number: WO 2018/033976

(56) References cited:
- EP-A1- 3 023 728
- JP-A- 2007 225 260
- JP-A- 2010 085 004
- JP-A- 2013 145 098
- JP-A- 2013 145 098

## Description

### [Technical Field]

The present invention relates to a heat pump system.

### [Background Art]

A heat pump system that heats a liquid heating medium such as water by using heat absorbed from outside air is widely used. As such a heat pump system, PTL 1 discloses a technique related to a heat pump water heater that heats water serving as a liquid heating medium. In this technique, in a heat exchanger, heat exchange between a refrigerant flowing in a refrigeration cycle and water flowing in an internal portion is performed. PTL 2 discloses a heat exchanger in a hot water supply apparatus according to the preamble of claim 1, which performs heat exchange between water and a refrigerant.

### [Citation List]

### [Patent Literature]

[PTL 1] Japanese Patent Application Publication No. 2012-117776
[PTL 2] JP 2013-145098 A

### [Summary of Invention]

### [Technical Problem]

As in the heat pump water heater in PTL 1, in a heating heat exchanger of the heat pump system, heat exchange between the refrigerant heated by heat absorbed from the outside air and the liquid heating medium is performed. Consequently, a problem arises in that the surface of a refrigerant pipe of the heating heat exchanger is cooled by the liquid heating medium during the operation of a heat pump cycle, and condensation forms. Dew condensation water causes corrosion of the pipe, and hence it is preferable to speedily remove the dew condensation water generated on the surface of the refrigerant pipe.

The present invention has been made in order to solve the above problem, and an object thereof is to provide a heat pump system capable of removing condensation having formed in a heating heat exchanger during the operation of a heat pump cycle, and preventing occurrence of corrosion by dew condensation water.

### [Solution to Problem]

A heat pump system according to the present invention as disclosed in claim 1.

### [Advantageous Effects of Invention]

According to the heat pump system of the present invention, it is possible to introduce a high-temperature refrigerant into the heating heat exchanger after the operation of the heat pump cycle is stopped, and hence it is possible to speedily remove the condensation having formed on the surface of a pipe of the heating heat exchanger during the operation without allowing the condensation to build up. With this, the corrosion of the heating heat exchanger caused by the dew condensation water is prevented.

### [Brief Description of Drawings]

Fig. 1 is a configuration diagram showing a heat pump system of Embodiment 1.
Fig. 2 is a control block diagram of the heat pump system of Embodiment 1.
Fig. 3 is a time chart showing the operation of each of a compressor, a blower, a circulation pump, and a decompression device in a condensation removal operation of Embodiment 1.
Fig. 4 is a flowchart showing the control routine of the condensation removal operation executed in the heat pump system of Embodiment 1.
Fig. 5 is a view showing an example of a map in which an operating frequency corresponding to an outside air temperature is specified.
Fig. 6 is a view showing another example of the map in which the operating frequency corresponding to the outside air temperature is specified.
Fig. 7 is a time chart showing the operation of each of the compressor, the blower, the circulation pump, and the decompression device in the condensation removal operation of Embodiment 2.
Fig. 8 is a flowchart showing the control routine of the condensation removal operation executed in the heat pump system of Embodiment 2.
Fig. 9 is a view showing an example of a map in which the opening of the decompression device corresponding to the outside air temperature is specified.
Fig. 10 is a view showing another example of the map in which the opening of the decompression device corresponding to the outside air temperature is specified.
Fig. 11 is a time chart showing the operation of each of the compressor, the blower, the circulation pump, and the decompression device in the condensation removal operation of Embodiment 3.
Fig. 12 is a flowchart showing the control routine of the condensation removal operation executed in the heat pump system of Embodiment 3.
Fig. 13 is a view showing an example of a map in which a circulation flow rate corresponding to the outside air temperature is specified.
Fig. 14 is a view showing another example of the map in which the circulation flow rate corresponding to the outside air temperature is specified.
Fig. 15 is a view showing an example of a map in which the circulation flow rate corresponding to an outlet temperature is specified.
Fig. 16 is a view showing another example of the map in which the circulation flow rate corresponding to the outlet temperature is specified.
Fig. 17 is a view showing an example of the hardware configuration of a first controller or a second controller provided in the heat pump system of Embodiments.
Fig. 18 is a view showing another example of the hardware configuration of the first controller or the second controller provided in the heat pump system of Embodiments.

### [Description of Embodiments]

Hereinbelow, Embodiments will be described with reference to the drawings. Common elements in the drawings are designated by the same reference numerals, and the duplicate description thereof will be simplified or omitted. Note that, in principle, the numbers, positions, orientations, shapes, and sizes of devices, appliances, and components in the present invention are not limited to the numbers, positions, orientations, shapes, and sizes thereof shown in the drawings.

### Embodiment 1

### [Configuration of Embodiment 1]

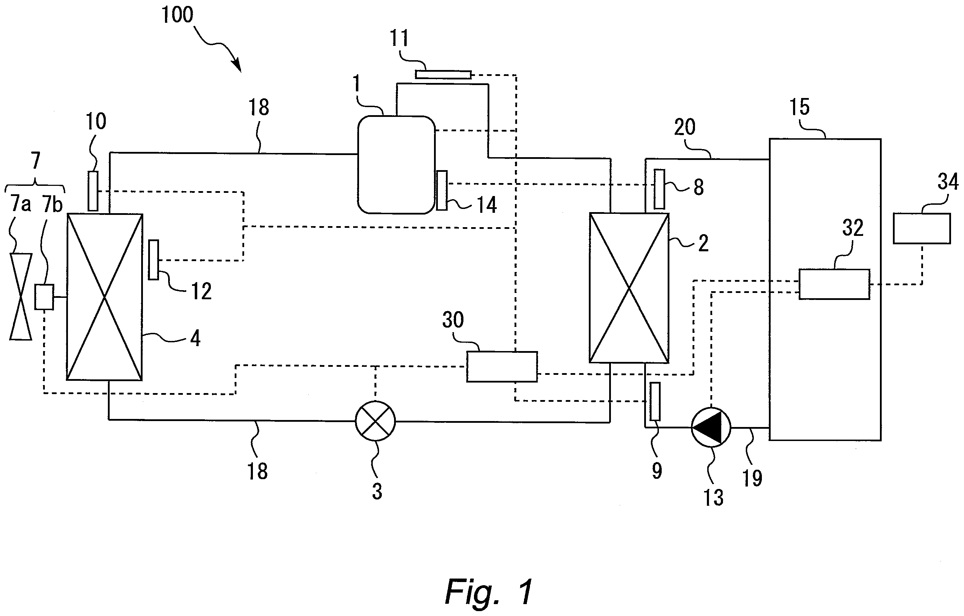

Fig. 1 is a configuration diagram showing a heat pump system of Embodiment 1. As shown in Fig. 1, a heat pump system 100 of the present embodiment includes a compressor 1, a heating heat exchanger 2, a decompression device 3, an evaporator 4, and a blower 7.

The compressor 1 compresses refrigerant gas. The type of a refrigerant is not particularly limited. The refrigerant may be carbon dioxide that allows the pressure of a high-pressure refrigerant compressed by the compressor 1 to reach supercritical pressure, or may also be a refrigerant that makes the pressure of the high-pressure refrigerant compressed by the compressor 1 lower than critical pressure. The heating heat exchanger 2 heats a heating medium by exchanging heat between the high-pressure refrigerant compressed by the compressor 1 and a liquid heating medium. As the heating medium, it is possible to use, e.g., water, a calcium chloride aqueous solution, an ethylene glycol aqueous solution, or alcohol. In the heat pump system 100 of Embodiment 1, water is used as the heating medium.

The heating heat exchanger 2 has a refrigerant passage and a heating medium passage. The compressor 1, the refrigerant passage of the heating heat exchanger 2, the decompression device 3, and the evaporator 4 are annularly connected to each other via a refrigerant pipe 18, and a refrigerant circuit is thereby formed. The heat pump system 100 performs the operation of a heat pump cycle, i.e., a refrigeration cycle by using this refrigerant circuit.

The decompression device 3 decompresses the high-pressure refrigerant having passed through the heating heat exchanger 2. The decompression device 3 is configured as, e.g., an electronically controlled expansion valve capable of varying an opening or the like, and the opening is controlled by a first controller described later. The high-pressure refrigerant becomes a low-pressure refrigerant in a gas-liquid two-phase state by passing through the decompression device 3. The evaporator 4 is a heat exchanger that exchanges heat between the low-pressure refrigerant that is decompressed in the decompression device 3 and outside air. The outside air is outdoor air. The low-pressure refrigerant in the gas-liquid two-phase state evaporates by absorbing heat of the outside air in the evaporator 4. Low-pressure refrigerant gas having evaporated in the evaporator 4 is sucked into the compressor 1.

The blower 7 blows air such that the outside air is supplied to the evaporator 4. The blower 7 includes a fan 7a and a fan motor 7b. The fan 7a rotates by being driven by the fan motor 7b. The blower 7 blows air toward the outside from the inside of the refrigerant circuit in Fig. 1. The outside air passes through the evaporator 4 and the blower 7 in this order. The heat pump system 100 includes an outside air temperature sensor 12. The outside air temperature sensor 12 is an example of an outside air temperature detection device that detects an outside air temperature. The outside air temperature sensor 12 detects the temperature of the outside air before being cooled in the evaporator 4.

The heat pump system 100 of the present embodiment includes a compressor outlet temperature sensor 11 for detecting a compressor outlet temperature that is the temperature of the high-pressure refrigerant compressed in the compressor 1. The compressor outlet temperature sensor 11 is an example of a compressor outlet temperature detection device that detects the compressor outlet temperature. In addition, the heat pump system 100 includes an evaporator outlet temperature sensor 10 for detecting an evaporator outlet temperature that is the temperature of the low-pressure refrigerant gas on the downstream side of the evaporator 4. The evaporator outlet temperature sensor 10 is an example of an evaporator outlet temperature detection device that detects the evaporator outlet temperature. Further, the heat pump system 100 includes an ammeter 14 that detects the current value of the compressor 1. The ammeter 14 is an example of a current detection device that detects the current value of the compressor 1.

The heat pump system 100 of the present embodiment includes a circulation pump 13, a heat storage tank 15, an outlet temperature sensor 8, and an inlet temperature sensor 9. The circulation pump 13 causes the heating medium to flow into the heating medium passage of the heating heat exchanger 2. The heat storage tank 15 can store the heating medium before and after the heating medium is heated. In the heat storage tank 15, a thermal stratification in which the upper side has a high temperature and the lower side has a low temperature due to a difference in the density of the heating medium caused by a difference in temperature may be formed. A plurality of temperature sensors (not shown) that detect the temperature distribution of the heating medium in a vertical direction in the heat storage tank 15 may be provided in the heat storage tank 15. It is possible to calculate the amount of stored heat of the heat storage tank 15 by detecting the temperature distribution of the heating medium in the vertical direction in the heat storage tank 15.

A first pipe 19 connects the lower portion of the heat storage tank 15 and the inlet of the heating medium passage of the heating heat exchanger 2. A second pipe 20 connects the outlet of the heating medium passage of the heating heat exchanger 2 and the upper portion of the heat storage tank 15. In the configuration shown in the drawing, the circulation pump 13 is disposed at some midpoint in the first pipe 19. The position of the circulation pump 13 is not limited to the position in the configuration shown in the drawing, and the circulation pump 13 may be disposed at some midpoint in the second pipe 20. By operating the circulation pump 13, the heating medium having flowed out from the lower portion of the heat storage tank 15 is sent to the heating heat exchanger 2 through the first pipe 19. The heating medium heated in the heating heat exchanger 2 is sent to the upper portion of the heat storage tank 15 through the second pipe 20.

The outlet temperature sensor 8 detects an outlet temperature that is the temperature of the heating medium flowing out from the heating heat exchanger 2. The outlet temperature sensor 8 is an example of an outlet temperature detection device that detects the outlet temperature. The outlet temperature sensor 8 is installed in the second pipe 20. The outlet temperature sensor 8 detects the temperature of the heating medium after being heated in the heating heat exchanger 2. The inlet temperature sensor 9 detects an inlet temperature that is the temperature of the heating medium flowing into the heating heat exchanger 2. The inlet temperature sensor 9 is installed in the first pipe 19. The inlet temperature sensor 9 detects the temperature of the heating medium before being heated in the heating heat exchanger 2.

The heat storage tank 15 is connected to a supply destination of the heating medium via a pipe that is not shown. The supply destination of the heating medium may be a heating appliance for heating indoor air with heat of the heating medium in addition to a hot water faucet for supplying water serving as the heating medium. Note that, as the heating appliance, it is possible to use, e.g., a floor heating panel, a radiator, a panel heater, or a fan convector. The heating medium heated in the heating heat exchanger 2 is supplied to the supply destination of the heating medium from the heat storage tank 15. However, the supply of the heating medium is not limited to that in the above-described configuration, and the heating medium heated in the heating heat exchanger 2 may also be directly supplied to the supply destination of the heating medium without the intervention of the heat storage tank 15.

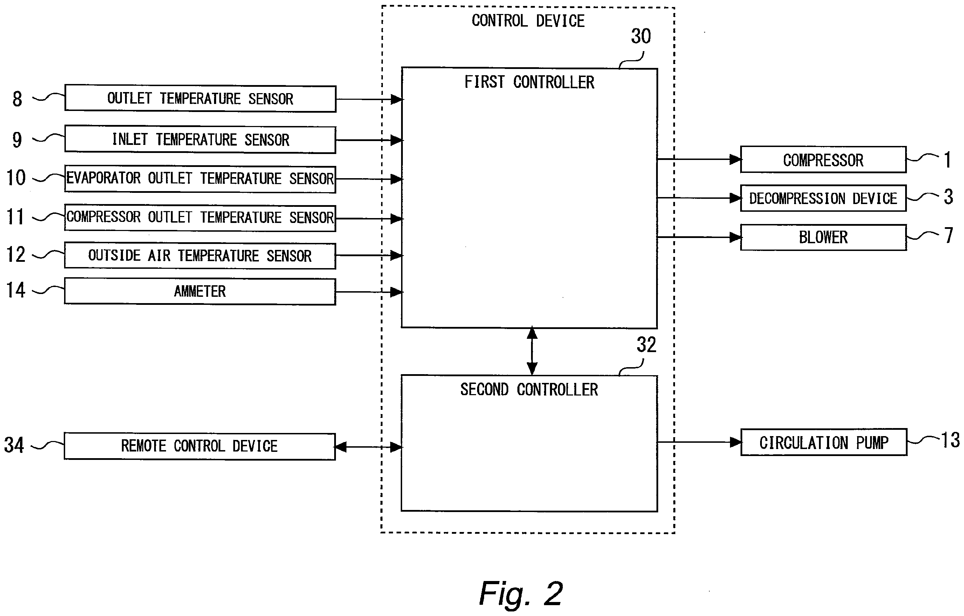

Fig. 2 is a control block diagram of the heat pump system 100 of Embodiment 1. Hereinbelow, the configuration of the control system of the heat pump system 100 of Embodiment 1 will be described also with reference to Fig. 2.

The heat pump system 100 of the present embodiment includes a first controller 30 and a second controller 32 each serving as a control device. The compressor 1, the decompression device 3, the blower 7, the outside air temperature sensor 12, the outlet temperature sensor 8, the inlet temperature sensor 9, the evaporator outlet temperature sensor 10, the compressor outlet temperature sensor 11, and the ammeter 14 are electrically connected to the first controller 30. The first controller 30 controls the operation of each of the compressor 1, the decompression device 3, and the blower 7. The circulation pump 13 is electrically connected to the second controller 32. The second controller 32 controls the operation of the circulation pump 13. In addition, the heat pump system 100 of the present embodiment includes a remote control device 34.

The first controller 30 and the second controller 32 are connected to each other by wired or wireless communication such that bidirectional data communication is allowed. The second controller 32 and the remote control device 34 are connected to each other by wired or wireless communication such that bidirectional data communication is allowed. The remote control device 34 is installed indoors. The remote control device 34 includes an operation unit such as a switch that is operated by a user, and a display unit that displays information on the state of the heat pump system 100 or the like.

The first controller 30 controls the operation of the compressor 1. The operating speed of the compressor 1 is variable. The first controller 30 can vary the operating speed of the compressor 1 by varying the operating frequency of a motor provided in the compressor 1 by inverter control. The operating speed of the compressor 1 increases as the operating frequency of the compressor 1 increases. As the operating speed of the compressor 1 increases, the circulation flow rate of the refrigerant increases, and the amount of heat supplied to the heating heat exchanger 2 by the refrigerant per unit time increases. Note that the amount of heat absorbed from the outside air by the refrigerant in the evaporator 4 increases as the outside air temperature increases. In the case where the operating frequency of the compressor 1 is constant, the amount of heat supplied to the heating heat exchanger 2 per unit time increases as the outside air temperature increases.

The first controller 30 controls the operation of the decompression device 3. The first controller 30 adjusts the pressure of the refrigerant introduced into the evaporator 4 by controlling the opening of the decompression device 3. In addition, the first controller 30 controls the operation of the blower 7. The first controller 30 adjusts the amount of heat absorbed from the outside air by the refrigerant in the evaporator 4 by controlling electric power supplied to the fan motor 7b.

The second controller 32 controls the operation of the circulation pump 13. The second controller 32 preferably drives the circulation pump 13 such that the flow rate of the heating medium that passes through the heating heat exchanger 2 is constant in terms of time. It is possible to improve the efficiency of the heat pump system 100 by making the flow rate of the heating medium that passes through the heating heat exchanger 2 constant in terms of time.

### [Operation of Embodiment 1]

### (Boiling operation)

The heat pump system 100 of Embodiment 1 boils water serving as the heating medium in the heat storage tank 15 by a boiling operation. The boiling operation is executed by starting the operation of the heat pump cycle and driving the circulation pump 13. As a result, after low-temperature water that flows out from the lower portion of the heat storage tank 15 is guided to the heating heat exchanger 2 via the first pipe 19 and is heated, the low-temperature water becomes high-temperature water, and the high-temperature water flows into the heat storage tank 15 from the upper portion of the heat storage tank 15 via the second pipe 20 and is stored. By executing the above boiling operation, the high-temperature water is stored from an upper layer portion inside the heat storage tank 15, and the layer of the high-temperature water gradually becomes thicker.

### (Condensation removal operation)

Next, a condensation removal operation executed by the heat pump system 100 of Embodiment 1 will be described. During the execution of the boiling operation in which the heat pump cycle is operated, heat exchange between the refrigerant and the heating medium in the heating heat exchanger 2 is performed. At this point, condensation forms on the surface of the refrigerant pipe in the heating heat exchanger 2. When generated dew condensation water is left on the surface of the refrigerant pipe even after the stop of the boiling operation, the dew condensation water may cause the corrosion of the pipe. Consequently, it is preferable to speedily remove the dew condensation water adhering to the surface of the pipe of the heating heat exchanger 2.

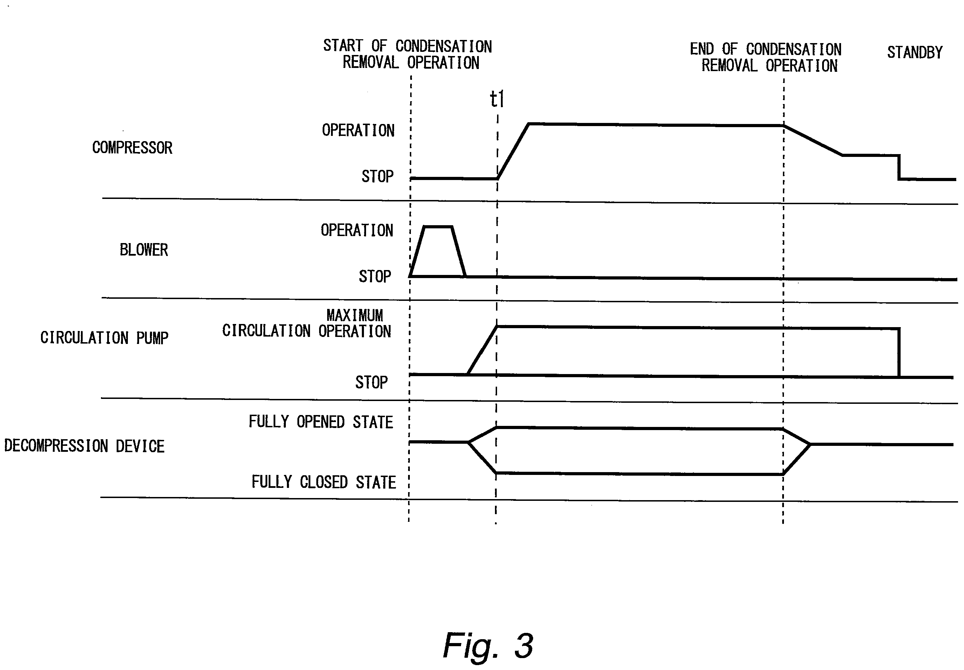

To cope with this, in the heat pump system 100 of Embodiment 1, after the boiling operation is stopped, the condensation removal operation for removing the dew condensation water adhering to the surface of the refrigerant passage of the heating heat exchanger 2 is performed. Fig. 3 is a time chart showing the operation of each of the compressor 1, the blower 7, the circulation pump 13, and the decompression device 3 in the condensation removal operation. Hereinbelow, specific processes executed in the condensation removal operation will be described with reference to the time chart shown in Fig. 3.

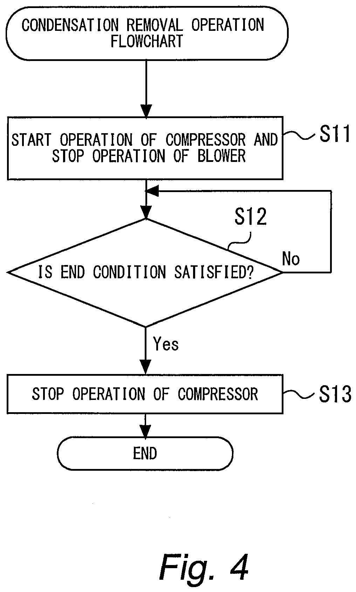

Fig. 4 is a flowchart showing the control routine of the condensation removal operation executed in the heat pump system 100 of Embodiment 1. Note that the routine shown in Fig. 4 is executed subsequently to the end of the boiling operation.

In Step S11 of the routine shown in Fig. 4, the condensation removal operation is started. More specifically, when a time t1 elapses after the stop of the boiling operation, the operation of the compressor 1 is started, and a state in which the operation of the blower 7 is stopped is maintained. The time chart in Fig. 3 shows the operations of the compressor 1 and the blower 7 described above. As the time t1, a predetermined value is read as a time required for the pressure in the refrigerant circuit formed by the refrigerant pipe 18 to become uniform. Note that the condition for start of the condensation removal operation is not limited to the lapse of the time t1. That is, pressure sensors may be disposed at several positions of the refrigerant pipe 18 and, when detected values of the pressure sensors become equal to each other, the condensation removal operation may be started. In addition, during a time period until the time t1 elapses after the end of the boiling operation, the blower 7 may be driven. With this, it is possible to improve accuracy in the detection of the outside air temperature by the outside air temperature sensor 12.

The compressor 1 is driven during the condensation removal operation, and hence the refrigerant having high temperature and high pressure is sent out from the compressor 1. The refrigerant having high temperature and high pressure that is sent out from the compressor 1 is then introduced into the heating heat exchanger 2. With this, the heating heat exchanger 2 is heated, and hence the condensation adhering to the surface of the refrigerant passage of the heating heat exchanger 2 is removed. Note that the high-temperature refrigerant circulates in the refrigerant circuit during the condensation removal operation, and hence the high-temperature refrigerant is also introduced into the evaporator 4. Consequently, when the blower 7 is driven during the condensation removal operation, the temperature of the refrigerant may be reduced and an effect of removing the condensation in the heating heat exchanger 2 may be spoiled. To cope with this, in the heat pump system of Embodiment 1, the operation of the blower 7 is stopped during the condensation removal operation, and the evaporator 4 is thereby prevented from being cooled.

It is preferable to set the operating frequency of the compressor 1 during the condensation removal operation to a value in a range that prevents a design provision pressure of the refrigerant pipe 18 from being exceeded and prevents a vibration caused by the compressor 1 from exceeding a prescribed value of stress of the refrigerant pipe 18. With this, it is possible to obtain an effect of reducing power consumption, an effect of preventing an increase in refrigerant pressure, and an effect of preventing sound and vibrations, and it becomes possible to provide the heat pump system 100 having high reliability.

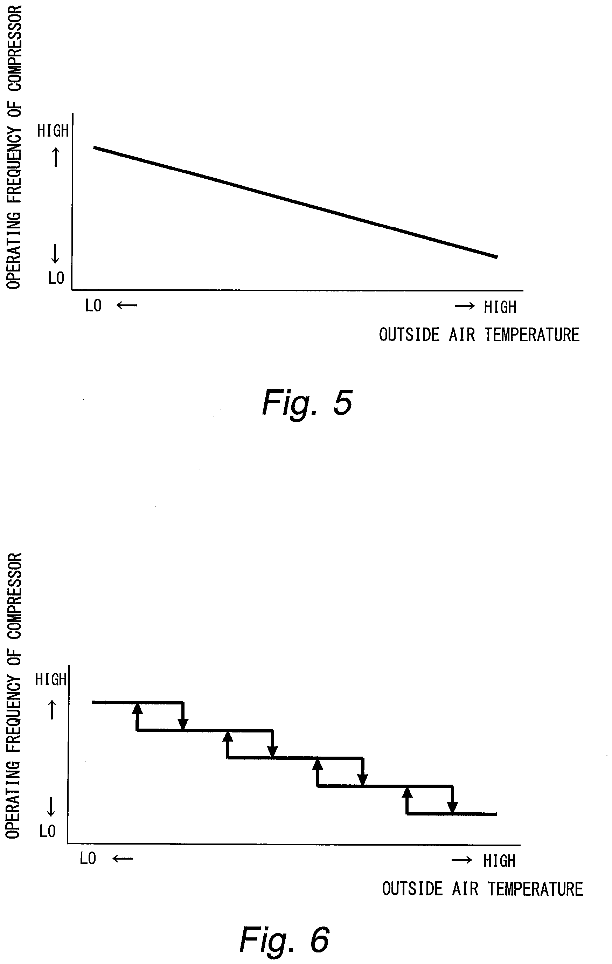

Note that the operating frequency of the compressor 1 during the condensation removal operation may be changed according to the outside air temperature. Fig. 5 is a view showing an example of a map in which the operating frequency corresponding to the outside air temperature is specified. In the example shown in the drawing, the operating frequency of the compressor 1 is specified so as to decrease linearly as the outside air temperature increases. The temperature of the heating heat exchanger 2 increases more easily as the outside air temperature becomes higher. That is, the necessity to increase the temperature of the refrigerant by the operation of the compressor 1 becomes lower as the outside air temperature becomes higher. Consequently, when the operating frequency of the compressor 1 is determined according to the outside air temperature based on the relation shown in Fig. 5, it becomes possible to further improve the effect of reducing power consumption, the effect of preventing an increase in refrigerant pressure, and the effect of preventing sound and vibrations described above.

As the outside air temperature used in the determination of the operating frequency, it is possible to use a value that is detected at any timing during a time period from the end of the boiling operation to the start of the condensation removal operation. In addition, the outside air temperature may be detected and the operating frequency may be updated during the condensation removal operation.

Incidentally, the relation of the operating frequency with respect to the outside air temperature is not limited to that shown in Fig. 5. Fig. 6 is a view showing another example of the map in which the operating frequency corresponding to the outside air temperature is specified. In the map shown in Fig. 6, the operating frequency is specified such that the outside air temperature exhibits hysteresis, and the operating frequency decreases stepwise as the outside air temperature increases. When the operating frequency of the compressor 1 is determined according to the outside air temperature based on the relation shown in Fig. 6, even in the case where the outside air temperature is detected and the operating frequency is updated at any interval during the condensation removal operation, it becomes possible to eliminate complicated change of the operating frequency to improve control stability.

Returning to the routine shown in Fig. 4 again, in the next Step S12, it is determined whether or not an end condition of the condensation removal operation is satisfied. More specifically, it is determined whether or not any one of the following five end conditions is met.

In the heat pump system 100 of Embodiment 1, the lapse of a preset time after the start of the operation of the compressor 1 is a first end condition. As the preset time, it is possible to use, e.g., a time preset by an experiment or the like as a time required to remove the condensation having formed in the heating heat exchanger 2. With this, it becomes possible to remove the condensation having formed in the heating heat exchanger 2 without consuming electricity uselessly.

A second end condition is that the evaporator outlet temperature detected by the evaporator outlet temperature sensor 10 is not less than a preset limit temperature. As the limit temperature in this condition, it is possible to use a value of not more than the upper limit temperature of the evaporator outlet temperature for preventing the pressure in the refrigerant circuit from exceeding a permissible limit. For example, the upper limit temperature is set to a value lower than the maximum value of the evaporator outlet temperature during the boiling operation. The refrigerant pipe 18 on the downstream side of the evaporator 4 is designed based on the assumption of low pressure. Consequently, it is possible to use the second end condition as the condition for preventing an abnormal increase in each of the refrigerant temperature and the refrigerant pressure of the portion of a low-temperature design circuit of the refrigerant circuit to secure the reliability of the system.

A third end condition is that the compressor outlet temperature detected by the compressor outlet temperature sensor 11 is not less than a preset limit temperature. As the limit temperature in this condition, it is possible to use a value of not more than the upper limit value of the compressor outlet temperature for preventing the pressure in the refrigerant circuit from exceeding the permissible limit. For example, the upper limit value is set to a value lower than the maximum value of the compressor outlet temperature during the boiling operation. The refrigerant pipe 18 on the downstream side of the compressor 1 is designed based on the assumption of high pressure. Consequently, it is possible to use the third end condition as the condition for preventing an abnormal increase in each of the refrigerant temperature and the refrigerant pressure of the portion of a high-pressure design circuit of the refrigerant circuit to secure the reliability of the system. In the case where the opening of the decompression device 3 is set to the opening on a closing side, the evaporator outlet temperature becomes low, but the compressor outlet temperature becomes high. In such a case, it is difficult to determine an excessive increase in the pressure of the refrigerant circuit by using the second end condition, and hence the effectiveness of the third end condition is further increased.

A fourth end condition is that the outlet temperature detected by the outlet temperature sensor 8 is not less than a present limit temperature. As the limit temperature in this condition, it is possible to use, e.g., a value of not more than the upper limit temperature of the outlet temperature for preventing a permissible limit of the heating heat exchanger 2 from being exceeded. With this, it is possible to prevent an abnormal increase in outlet temperature to secure the reliability of the system. Note that the effectiveness of the fourth end condition is increased particularly when the circulation pump 13 is operated.

A fifth end condition is that the current value detected by the ammeter 14 is not less than a preset limit current value. The refrigerant pressure on the downstream side of the compressor 1 is correlated with the current value of the compressor 1. Accordingly, as the limit current value in this condition, it is possible to use a value of not more than the current value corresponding to a permissible limit of the refrigerant pressure on the downstream side of the compressor 1. Consequently, it is possible to use the fifth end condition as the condition for preventing an abnormal increase in the refrigerant pressure of the portion of the high-pressure design circuit of the refrigerant circuit to secure the reliability of the system. Note that the effectiveness of the fifth end condition is increased particularly in the case where a pressure sensor for detecting the refrigerant pressure on the downstream side of the compressor 1 is not provided.

Note that, in Step S12, it is determined whether or not any one of the five end conditions described above is met. However, in Step S12, it may be determined whether or not only one of the five end conditions described above is met, or it may be determined whether or not any one of a plurality of freely-selected end conditions is met.

In the case where the determination is not met as the result of the process in Step S12, the routine moves to Step S12 again, and it is determined whether or not the end condition is met. On the other hand, in the case where the determination is met in Step S12 described above, the routine moves to the next Step S13. In Step S13, the operation of the compressor 1 is stopped.

Thus, according to the condensation removal operation in the heat pump system of Embodiment 1, it is possible to raise the temperature of the refrigerant passage of the heating heat exchanger 2 to a high temperature, and hence it is possible to speedily remove the condensation having formed on the surface of the refrigerant passage during the boiling operation without allowing the condensation to build up. With this, it is possible to prevent the corrosion of the pipe of the heating heat exchanger 2 without reducing the reliability of the heat pump system related to resistance to pressure, sound, and vibrations.

Incidentally, in the heat pump system of Embodiment 1 described above, the condensation removal operation is executed subsequently to the end of the boiling operation. However, the time when the condensation removal operation can be executed is not limited to the above time. That is, the condensation removal operation may be performed again during a time period from the end of the condensation removal operation to the start of the next boiling operation. This applies to the heat pump systems of other embodiments described later.

### Embodiment 2

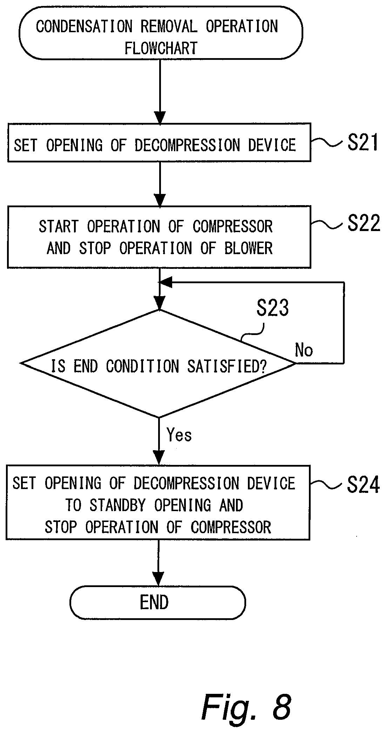

Next, the heat pump system of Embodiment 2 will be described with reference to the drawings. The heat pump system of Embodiment 2 is implemented by causing the control device to execute a routine shown in Fig. 8 that will be described later by using the same hardware configuration as that of Embodiment 1.

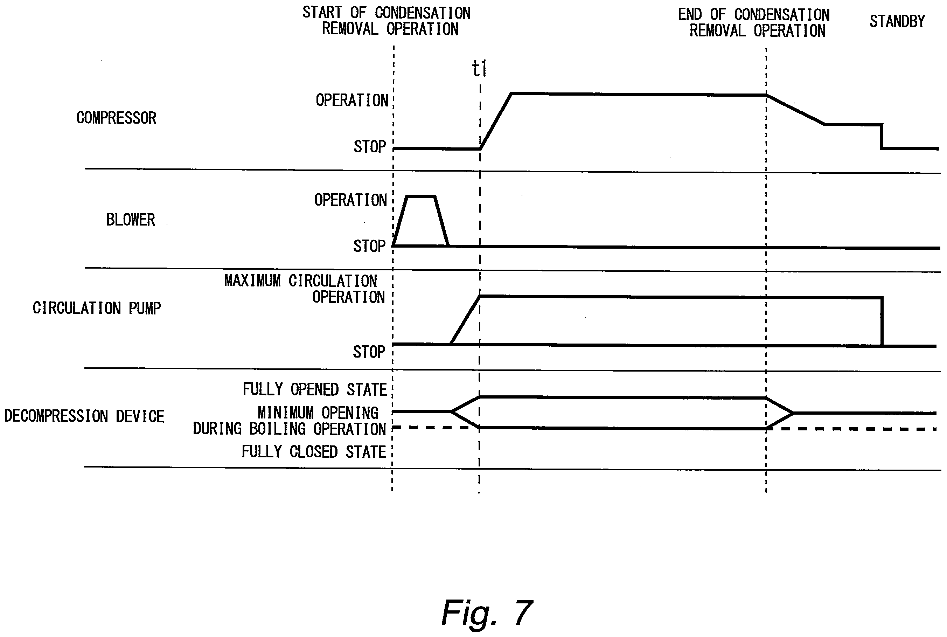

The heat pump system of Embodiment 2 is characterized in that the opening of the decompression device 3 is controlled in addition to the control of the compressor 1 and the blower 7 described above in the condensation removal operation. Fig. 7 is a time chart showing the operation of each of the compressor 1, the blower 7, the circulation pump 13, and the decompression device 3 in the condensation removal operation. Hereinbelow, specific processes executed in the condensation removal operation will be described with reference to the time chart shown in Fig. 7.

Fig. 8 is a flowchart showing the control routine of the condensation removal operation executed in the heat pump system 100 of Embodiment 2. Note that the routine shown in Fig. 8 is executed subsequently to the end of the boiling operation.

In Step S21 of the routine shown in Fig. 8, the opening of the decompression device 3 is controlled to a preset opening. Note that the opening in this step is, e.g., the opening of not less than the minimum opening in the boiling operation. The time chart in Fig. 7 shows the operation of the decompression device 3 described above. The opening of the decompression device 3 may also be set to a fully opened state. As the opening of the decompression device 3 decreases, the pressure of the low-pressure refrigerant on the downstream side of the decompression device 3 decreases, but the pressure of the high-pressure refrigerant on the downstream side of the compressor 1 increases. Consequently, when the opening of the decompression device 3 is controlled so as to be not less than the minimum opening in the boiling operation, it is possible to prevent the pressure of the high-pressure refrigerant from becoming higher than the maximum pressure during the boiling operation.

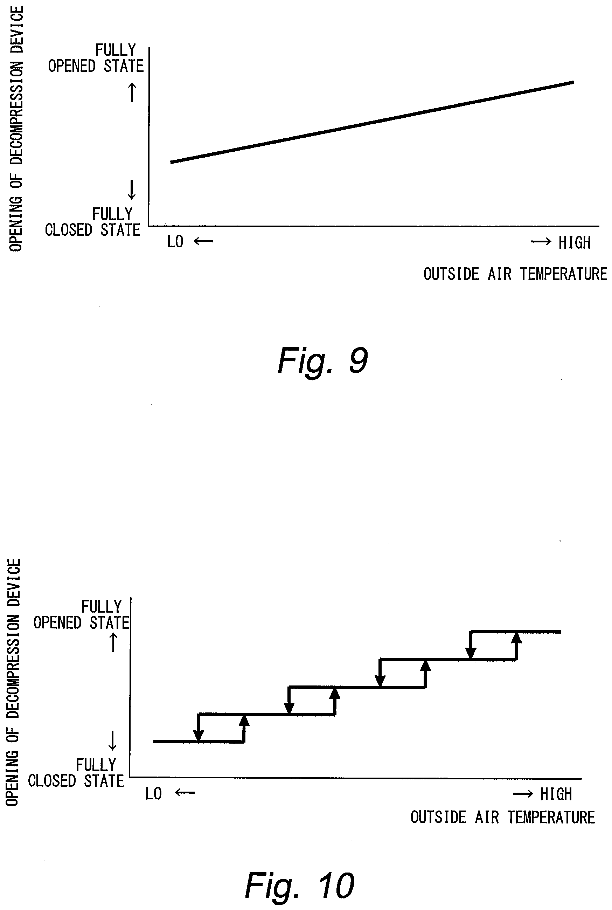

Note that the opening of the decompression device 3 during the condensation removal operation may be changed according to the outside air temperature. Fig. 9 is a view showing an example of a map in which the opening of the decompression device 3 corresponding to the outside air temperature is specified. In the example shown in the drawing, the opening of the decompression device 3 is specified so as to increase linearly as the outside air temperature increases. As described above, the temperature of the heating heat exchanger 2 increases more easily as the outside air temperature becomes higher. That is, as the outside air temperature becomes higher, the possibility that the temperature and the pressure of the refrigerant in the refrigerant circuit will excessively increase becomes higher. Consequently, when the opening of the decompression device 3 is determined according to the outside air temperature based on the relation shown in Fig. 9, it is possible to obtain the effect of further improving the effect of preventing an increase in refrigerant pressure to secure the reliability of the system.

Incidentally, the relation of the opening of the decompression device 3 with respect to the outside air temperature is not limited to that in Fig. 9. Fig. 10 is a view showing another example of the map in which the opening of the decompression device 3 corresponding to the outside air temperature is specified. In the map shown in Fig. 10, the opening of the decompression device 3 is specified such that the outside air temperature exhibits hysteresis, and the opening of the decompression device 3 increases stepwise as the outside air temperature increases. When the opening of the decompression device 3 is determined according to the outside air temperature based on the relation shown in Fig. 10, even in the case where the outside air temperature is detected and the opening of the decompression device 3 is updated at any interval during the condensation removal operation, it becomes possible to eliminate complicated change of the opening of the decompression device 3 to improve control stability.

In the next Step S22, the condensation removal operation is started. Specifically, the same process as that in Step S11 described above is executed. In the next Step S23, it is determined whether or not the end condition of the condensation removal operation is satisfied. Specifically, the same process as that in Step S12 described above is executed. In the case where the determination is not met as the result of the process in Step S23, the routine moves to Step S23 again, and it is determined whether or not the end condition is met. On the other hand, in the case where the determination is met in Step S23 described above, the routine moves to the next Step S24. In Step S24, the operation of the compressor 1 is stopped, and the opening of the decompression device 3 is controlled to the opening during standby.

Thus, according to the condensation removal operation in the heat pump system of Embodiment 2, it is possible to raise the temperature of the refrigerant pipe of the heating heat exchanger 2 to a high temperature, and hence it is possible to speedily remove the condensation having formed in the refrigerant pipe during the boiling operation without allowing the condensation to build up. With this, it is possible to prevent the corrosion of the pipe of the heating heat exchanger 2 without reducing the reliability of the heat pump system related to resistance to pressure, sound, and vibrations.

In addition, according to the heat pump system of Embodiment 2, the opening of the decompression device 3 is controlled in the condensation removal operation. With this, it is possible to prevent an excessive increase in each of the pressure and the temperature of the refrigerant of the refrigerant circuit to provide the heat pump system having high reliability.

### Embodiment 3

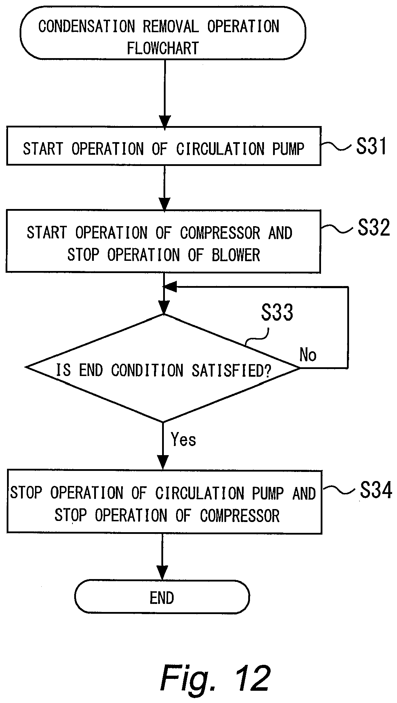

Next, the heat pump system of Embodiment 3 will be described with reference to the drawings. The heat pump system of Embodiment 3 is implemented by causing the control device to execute the routine shown in Fig. 12 that will be described later by using the same hardware configuration as that of Embodiment 1.

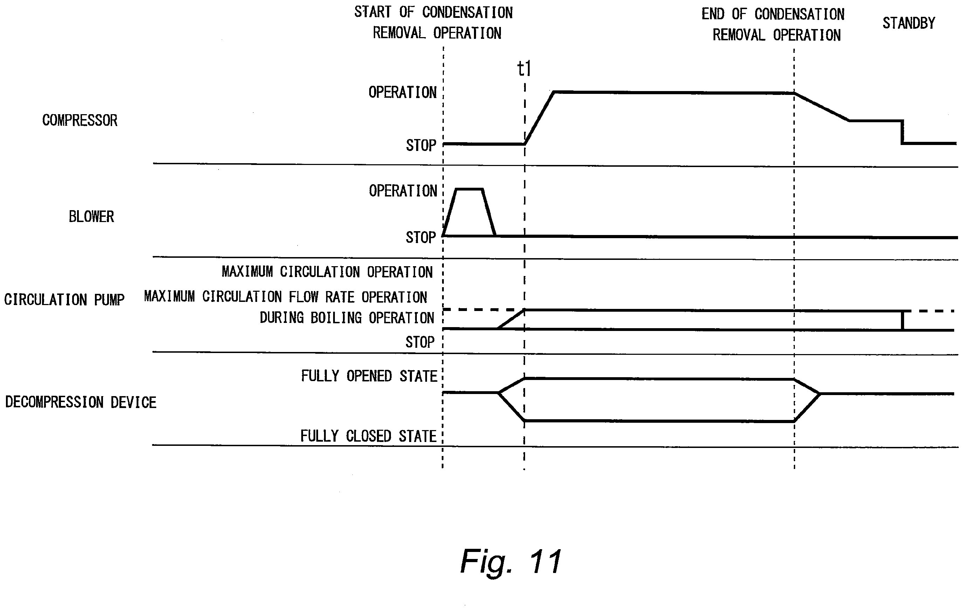

The heat pump system of Embodiment 3 is characterized in that the operation of the circulation pump 13 is also controlled in addition to the control of the compressor 1 and the blower 7 described above in the condensation removal operation. Fig. 11 is a time chart showing the operation of each of the compressor 1, the blower 7, the circulation pump 13, and the decompression device 3 in the condensation removal operation. Hereinbelow, specific processes executed in the condensation removal operation will be described with reference to the time chart shown in Fig. 11.

Fig. 12 is a flowchart showing the control routine of the condensation removal operation executed in the heat pump system 100 of Embodiment 3. Note that the routine shown in Fig. 12 is executed subsequently to the end of the boiling operation.

In Step S31 of the routine shown in Fig. 12, the operation of the circulation pump 13 is started. Note that the circulation flow rate of the heating medium of the circulation pump 13 is set to be not more than the maximum circulation flow rate during the boiling operation. The time chart in Fig. 11 shows the operation of the circulation pump 13 described above. With this, it is possible to prevent an excessive increase in the temperature of the heating medium in the heating heat exchanger 2.

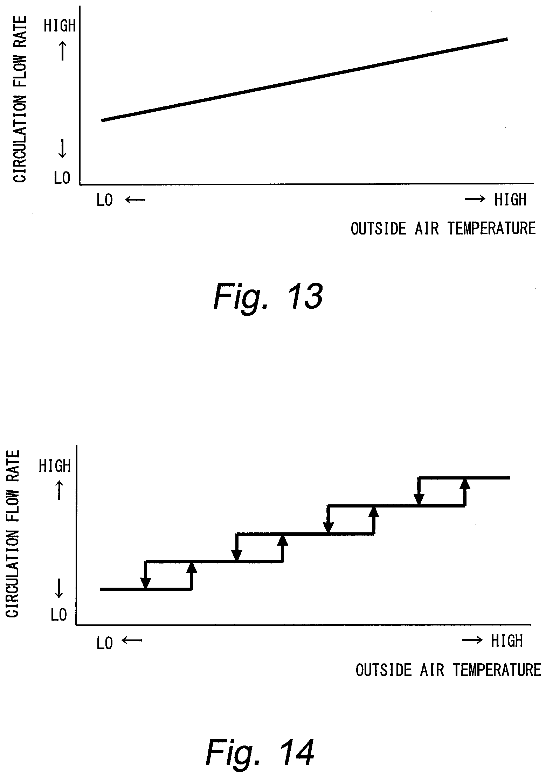

Note that the circulation flow rate of the heating medium of the circulation pump 13 during the condensation removal operation may be changed according to the outside air temperature. Fig. 13 is a view showing an example of a map in which the circulation flow rate corresponding to the outside air temperature is specified. In the example shown in the drawing, the circulation flow rate is specified so as to increase linearly as the outside air temperature increases. As described above, the temperature of the heating heat exchanger 2 increases more easily as the outside air temperature becomes higher. Consequently, when the circulation flow rate is determined according to the outside air temperature based the relation shown in Fig. 13, it is possible to obtain the effect of preventing an abnormal increase in the temperature of the heating medium in the heating heat exchanger 2 to secure the reliability of the system.

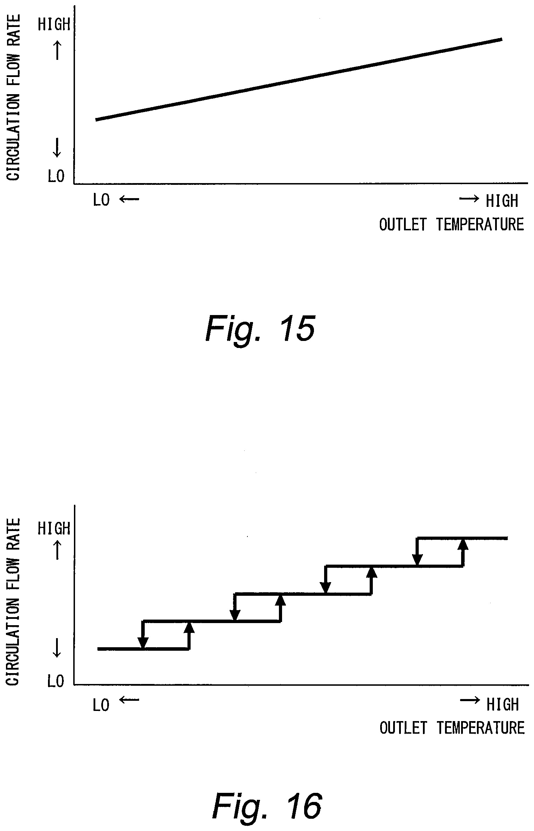

Incidentally, the relation of the circulation flow rate with respect to the outside air temperature is not limited to that in Fig. 13. Fig. 14 is a view showing another example of the map in which the circulation flow rate corresponding to the outside air temperature is specified. In the map shown in Fig. 14, the circulation flow rate is specified such that the outside air temperature exhibits hysteresis, and the circulation flow rate increases stepwise as the outside air temperature increases. When the circulation flow rate is determined according to the outside air temperature based on the relation shown in Fig. 15, even in the case where the outside air temperature is detected and the circulation flow rate is updated at any interval during the condensation removal operation, it becomes possible to eliminate complicated change of the circulation flow rate to improve control stability.

In the next Step S32, the condensation removal operation is started. Specifically, the same process as that in Step S11 described above is executed. In the next Step S33, it is determined whether or not the end condition of the condensation removal operation is satisfied. Specifically, the same process as that in Step S12 described above is executed. In the case where the determination is not met as the result of the process in Step S33, the routine moves to Step S33 again, and it is determined whether or not the end condition is met. On the other hand, in the case where the determination is met in Step S33 described above, the routine moves to the next Step S34. In Step S34, the operation of the circulation pump 13 is stopped, and the operation of the compressor 1 is stopped.

Thus, according to the condensation removal operation in the heat pump system of Embodiment 3, it is possible to raise the temperature of the refrigerant pipe of the heating heat exchanger 2 to a high temperature, and hence it is possible to speedily remove the condensation having formed in the refrigerant passage of the heating heat exchanger 2 during the boiling operation without allowing the condensation to build up. With this, it is possible to prevent the corrosion of the pipe of the heating heat exchanger 2 without reducing the reliability of the heat pump system related to resistance to pressure, sound, and vibrations.

In addition, according to the heat pump system of Embodiment 3, the operation of the circulation pump 13 is performed during the condensation removal operation. With this, an abnormal increase in the temperature of the heating medium is prevented in the heating heat exchanger 2, and hence the reliability of the system is increased.

Incidentally, in the heat pump system of Embodiment 3 described above, the circulation flow rate of the circulation pump 13 is set according to the outside air temperature. However, the setting of the circulation flow rate is not limited to the method that sets the circulation flow rate according to the outside air temperature, and the circulation flow rate may also be set according to the outlet temperature of the heating medium of the heating heat exchanger 2. Fig .15 is a view showing an example of a map in which the circulation flow rate corresponding to the outlet temperature is specified. In the example shown in the drawing, the circulation flow rate is specified so as to increase linearly as the outlet temperature increases. This means that the temperature of the heating heat exchanger 2 increases as the outlet temperature of the heating heat exchanger 2 increases. Consequently, when the circulation flow rate is determined according to the outlet temperature based on the relation shown in Fig. 15, it is possible to prevent an abnormal increase in the temperature of the heating medium in the heating heat exchanger 2 without consuming electricity uselessly.

The relation of the circulation flow rate with respect to the outlet temperature is not limited to that in Fig. 15. Fig. 16 is a view showing another example of the map in which the circulation flow rate corresponding to the outlet temperature is specified. In the map shown in Fig. 16, the circulation flow rate is specified such that the outlet temperature exhibits hysteresis, and the circulation flow rate increases stepwise as the outlet temperature increases. When the circulation flow rate is determined according to the outlet temperature based on the relation shown in Fig. 16, even in the case where the outlet temperature is detected and the circulation flow rate is updated at any interval during the condensation removal operation, it becomes possible to eliminate complicated change of the circulation flow rate to improve control stability.

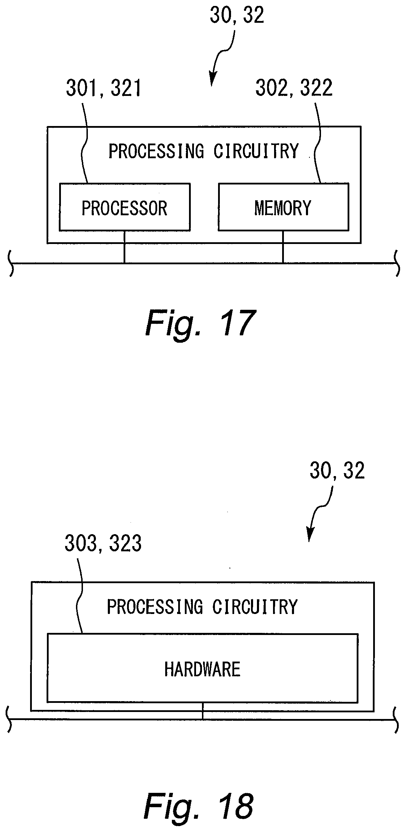

The control device provided in the heat pump system of each of Embodiments 1 to 3 may be configured in the following manner. Fig. 17 is a view showing an example of the hardware configuration of the first controller 30 or the second controller 32 provided in the heat pump system 100 of Embodiments. The individual functions of the first controller 30 are implemented by processing circuitry. The individual functions of the second controller 32 are implemented by processing circuitry. In the example shown in Fig. 17, the processing circuitry of the first controller 30 includes at least one processor 301 and at least one memory 302. The processing circuitry of the second controller 32 includes at least one processor 321 and at least one memory 322.

In the case where the processing circuitry includes at least one processor 301 or 321 and at least one memory 302 or 322, the individual functions of the first controller 30 or the second controller 32 are implemented by software, firmware, or a combination of software and firmware. At least one of the software and the firmware is described as a program. At least one of the software and the firmware is stored in at least one memory 302 or 322. At least one processor 301 or 321 implements the individual functions of the first controller 30 or the second controller 32 by reading and executing a program stored in at least one memory 302 or 322. At least one processor 301 or 321 is also referred to as a CPU (Central Processing Unit), a central processor, a processing unit, an arithmetic unit, a microprocessor, a microcomputer, or a DSP (Digital Signal Processor). At least one memory 302 or 322 is, e.g., a non-volatile or volatile semiconductor memory such as a RAM (Random Access Memory), a ROM (Read Only Memory), a flash memory, an EPROM (Erasable Programmable Read Only Memory), or an EEPROM (Electrically Erasable Programmable Read-Only Memory), a magnetic disk, a flexible disk, an optical disk, a compact disc, a minidisc, or a DVD (Digital Versatile Disc).

Fig. 18 is a view showing another example of the hardware configuration of the first controller 30 or the second controller 32 provided in the heat pump system 100 of Embodiments. In the example shown in Fig. 18, the processing circuitry of the first controller 30 includes at least one dedicated hardware 303. The processing circuitry of the second controller 32 includes at least one dedicated hardware 323.

In the case where the processing circuitry includes at least one dedicated hardware 303 or 323, the processing circuitry is, e.g., a single circuit, a composite circuit, a programmed processor, a parallel-programmed processor, an ASIC (Application Specific Integrated Circuit), an FPGA (Field-Programmable Gate Array), or a combination thereof. The functions of the individual units of the first controller 30 or the second controller 32 may be implemented individually by the processing circuitry. In addition, the functions of the individual units of the first controller 30 or the second controller 32 may also be implemented collectively by the processing circuitry.

Further, part of the individual functions of the first controller 30 may be implemented by the dedicated hardware 303, and the other part thereof may be implemented by software or firmware. Thus, the processing circuitry implements the individual functions of the first controller 30 by the hardware 303, the software, the firmware, or a combination thereof.

Furthermore, part of the individual functions of the second controller 32 may be implemented by the dedicated hardware 323, and the other part thereof may be implemented by software or firmware. Thus, the processing circuitry implements the individual functions of the second controller 32 by the hardware 323, the software, the firmware, or a combination thereof.

In the present embodiment, the first controller 30 and the second controller 32 cooperate with each other to control the operation of the heat pump system 100. However, the embodiment is not limited to such a configuration, and the operation of the heat pump system 100 may also be controlled by a single controller.

### [Reference Signs List]

- 100: Heat pump system
- 1: Compressor
- 2: Heating heat exchanger
- 3: Decompression device
- 4: Evaporator
- 7: Blower
- 7a: Fan
- 7b: Fan motor
- 8: Outlet temperature sensor
- 9: Inlet temperature sensor
- 12: Outside air temperature sensor
- 13: Circulation pump
- 14: Ammeter
- 15: Heat storage tank
- 18: Refrigerant pipe
- 19: First pipe
- 20: Second pipe
- 30: First controller
- 301: Processor
- 302: Memory
- 303: Hardware
- 32: Second controller
- 321: Processor
- 322: Memory
- 323: Hardware
- 34: Remote control device

## Claims

1. A heat pump system (100) comprising:
a compressor (1) configured to compress a refrigerant;
a heating heat exchanger (2) configured to exchange heat between the refrigerant compressed by the compressor (1) and a liquid heating medium;
a decompression device (3) configured to decompress the refrigerant;
an evaporator (4) configured to exchange heat between the refrigerant decompressed by the decompression device (3) and outside air;
a blower (7) configured to blow air to the evaporator (4); and
a control device (30, 32) configured to control operations of the compressor (1) and the blower (7), **characterised in that**
the control device (30, 32) is configured to perform a condensation removal operation for removing a condensation of the heating heat exchanger (2) in which the blower (7) is stopped and the compressor (1) is operated after stopping an operation for heating the heating medium by driving the compressor (1) and the blower (7).

2. The heat pump system (100) according to Claim 1, further comprising:
an outside air temperature detection device (12) configured to detect an outside air temperature, wherein
the control device (30, 32) is configured to determine an operating frequency at which the compressor (1) is operated according to the outside air temperature in the condensation removal operation.

3. The heat pump system (100) according to Claim 2, wherein
the control device (30, 32) is configured to determine the operating frequency such that the operating frequency decreases linearly as the outside air temperature increases.

4. The heat pump system (100) according to Claim 2, wherein
the control device (30, 32) is configured to determine the operating frequency such that the operating frequency decreases stepwise as the outside air temperature increases.

5. The heat pump system (100) according to any one of Claims 1 to 4, wherein
the control device (30, 32) is configured to end the condensation removal operation when a predetermined time elapses after start of the condensation removal operation.

6. The heat pump system (100) according to any one of Claims 1 to 4, further comprising:
an evaporator outlet temperature detection device (10) configured to detect an evaporator outlet temperature that is a temperature of the refrigerant flowing out from the evaporator (4), wherein
the control device (30, 32) is configured to end the condensation removal operation in a case where the evaporator outlet temperature reaches a predetermined limit temperature.

7. The heat pump system (100) according to any one of Claims 1 to 4, further comprising:
a compressor outlet temperature detection device (11) configured to detect a compressor outlet temperature that is a temperature of the refrigerant flowing out from the compressor (1), wherein
the control device (30, 32) is configured to end the condensation removal operation in a case where the compressor outlet temperature reaches a predetermined limit temperature.

8. The heat pump system (100) according to any one of Claims 1 to 4, further comprising:
a current detection device (14) configured to detect a current value of the compressor (1), wherein
the control device (30, 32) is configured to end the condensation removal operation in a case where the current value reaches a predetermined limit current value.

9. The heat pump system (100) according to any one of Claims 1 to 4, further comprising:
an outlet temperature detection device (8) configured to detect an outlet temperature that is a temperature of the heating medium flowing out from the heating heat exchanger (2), wherein
the control device (30, 32) is configured to end the condensation removal operation in a case where the outlet temperature reaches a predetermined limit temperature.

10. The heat pump system (100) according to any one of Claims 1 to 9, wherein
the control device (30, 32) is configured to open the decompression device (3) such that an opening of the decompression device (3) is not less than a predetermined minimum opening in the condensation removal operation.

11. The heat pump system (100) according to any one of Claims 1 to 9, further comprising:
an outside air temperature detection device (12) configured to detect an outside air temperature, wherein
the control device (30, 32) is configured to determine an opening of the decompression device (3) according to the outside air temperature in the condensation removal operation.

12. The heat pump system (100) according to any one of Claims 1 to 11, further comprising:
a pump (13) configured to send the heating medium to the heating heat exchanger (2), wherein
the control device (30, 32) is configured to operate the pump (13) such that a flow rate of the heating medium sent to the heating heat exchanger (2) is not more than a predetermined maximum flow rate in the condensation removal operation.

13. The heat pump system (100) according to any one of Claims 1 to 11, further comprising:
a pump (13) configured to send the heating medium to the heating heat exchanger (2); and
an outside air temperature detection device (12) configured to detect an outside air temperature, wherein
the control device (30, 32) is configured to determine a flow rate of the heating medium sent to the heating heat exchanger (2) according to the outside air temperature in the condensation removal operation.

14. The heat pump system (100) according to any one of Claims 1 to 11, further comprising:
a pump (13) configured to send the heating medium to the heating heat exchanger (2); and
an outlet temperature detection device (8) configured to detect an outlet temperature that is a temperature of the heating medium flowing out from the heating heat exchanger (2), wherein
the control device (30, 32) is configured to determine a flow rate of the heating medium sent to the heating heat exchanger (2) according to the outlet temperature in the condensation removal operation.

15. The heat pump system (100) according to any one of Claims 1 to 14, wherein
the control device (30, 32) is configured to perform the condensation removal operation after a lapse of a predetermined time from stop of the operation for heating the heating medium by driving the compressor (1) and the blower (7).

## Patentansprüche

1. Wärmepumpensystem (100), umfassend:
einen Verdichter (1), der eingerichtet ist, ein Kältemittel zu verdichten;
einen Erwärmungs-Wärmetauscher (2), der eingerichtet ist, Wärme zwischen dem durch den Verdichter (1) verdichteten Kältemittel und einem flüssigen Erwärmungsmedium auszutauschen;
eine Entspannungseinrichtung (3), die eingerichtet ist, das Kältemittel zu entspannen;
einen Verdampfer (4), der eingerichtet ist, Wärme zwischen dem durch den Verdichter (3) verdichteten Kältemittel und Außenluft auszutauschen;
ein Gebläse (7), das eingerichtet ist, Luft zum Verdampfer (4) zu blasen; und
eine Steuerungseinrichtung (30, 32), die eingerichtet ist, Betriebe des Verdichters (1) und des Gebläses (7) zu steuern, **dadurch gekennzeichnet, dass**
die Steuerungseinrichtung (30, 32) eingerichtet ist, einen Kondensat-Entfernungsbetrieb zum Entfernen von Kondensat des Erwärmungs-Wärmetauschers (2) durchzuführen, bei dem das Gebläse (7) gestoppt wird und der Verdichter (1) betrieben wird nach Stoppen eines Betriebs zum Erwärmen des Erwärmungsmediums durch Antreiben des Verdichters (1) und des Gebläses (7).

2. Wärmepumpensystem (100) nach Anspruch 1, ferner umfassend:
eine Außenlufttemperaturerfassungseinrichtung (12), die eingerichtet ist, eine Außenlufttemperatur zu erfassen, wobei
die Steuerungseinrichtung (30, 32) eingerichtet ist, eine Betriebsfrequenz, mit der der Verdichter (1) betrieben wird, zu bestimmen gemäß der Außenlufttemperatur im Kondensat-Entfernungsbetrieb.

3. Wärmepumpensystem (100) nach Anspruch 2, wobei
die Steuerungseinrichtung (30, 32) eingerichtet ist, die Betriebsfrequenz zu bestimmen, so dass die Betriebsfrequenz mit zunehmender Außenlufttemperatur linear abnimmt.

4. Wärmepumpensystem (100) nach Anspruch 2, wobei
die Steuerungseinrichtung (30, 32) eingerichtet ist, die Betriebsfrequenz zu bestimmen, so dass die Betriebsfrequenz mit zunehmender Außenlufttemperatur schrittweise abnimmt.

5. Wärmepumpensystem (100) nach einem der Ansprüche 1 bis 4, wobei
die Steuerungseinrichtung (30, 32) eingerichtet ist, den Kondensat-Entfernungsbetrieb zu beenden, wenn eine vorherbestimmte Zeit nach dem Start des Kondensat-Entfernungsbetriebs abläuft.

6. Wärmepumpensystem (100) nach einem der Ansprüche 1 bis 4, ferner umfassend:
eine Verdampferauslasstemperaturerfassungseinrichtung (10), die eingerichtet ist, eine Verdampferauslasstemperatur, die eine Temperatur des aus dem Verdampfer (4) ausströmenden Kältemittels ist, zu erfassen, wobei
die Steuerungseinrichtung (30, 32) eingerichtet ist, den Kondensat-Entfernungsbetrieb zu beenden, in einem Fall, wo die Verdampferauslasstemperatur eine vorherbestimmte Grenztemperatur erreicht.

7. Wärmepumpensystem (100) nach einem der Ansprüche 1 bis 4, ferner umfassend:
eine Verdichterauslasstemperaturerfassungseinrichtung (11), die eingerichtet ist, eine Verdampferauslasstemperatur, die eine Temperatur des aus dem Verdampfer (1) ausströmenden Kältemittels ist, zu erfassen, wobei
die Steuerungseinrichtung (30, 32) eingerichtet ist, den Kondensat-Entfernungsbetrieb zu beenden, in einem Fall, wo die Verdichterauslasstemperatur eine vorherbestimmte Grenztemperatur erreicht.

8. Wärmepumpensystem (100) nach einem der Ansprüche 1 bis 4, ferner umfassend:
eine Stromerfassungseinrichtung (14), die eingerichtet ist, einen Stromwert des Verdichters (1) zu erfassen, wobei
die Steuerungseinrichtung (30, 32) eingerichtet ist, den Kondensat-Entfernungsbetrieb zu beenden, in einem Fall, wo der Stromwert einen vorherbestimmten Grenzstromwert erreicht.

9. Wärmepumpensystem (100) nach einem der Ansprüche 1 bis 4, ferner umfassend:
eine Auslasstemperaturerfassungseinrichtung (8), die eingerichtet ist, eine Auslasstemperatur, die eine Temperatur des Erwärmungsmediums ist, das aus dem Erwärmungs-Wärmetauscher (2) herausströmt, zu erfassen, wobei
die Steuerungseinrichtung (30, 32) eingerichtet ist, den Kondensat-Entfernungsbetrieb zu beenden, in einem Fall, wo die Auslasstemperatur eine vorherbestimmte Grenztemperatur erreicht.

10. Wärmepumpensystem (100) nach einem der Ansprüche 1 bis 9, wobei
die Steuerungseinrichtung (30, 32) eingerichtet ist, die Entspannungseinrichtung (3) zu öffnen, so dass eine Öffnung der Entspannungseinrichtung (3) nicht kleiner ist als eine vorherbestimmte Mindestöffnung im Kondensat-Entfernungsbetrieb.

11. Wärmepumpensystem (100) nach einem der Ansprüche 1 bis 9, ferner umfassend:
eine Außenlufttemperaturerfassungseinrichtung (12), die eingerichtet ist, eine Außenlufttemperatur zu erfassen, wobei
die Steuerungseinrichtung (30, 32) eingerichtet ist, ein Öffnen der Entspannungseinrichtung (3) zu bestimmen gemäß der Außenlufttemperatur im Kondensat-Entfernungsbetrieb.

12. Wärmepumpensystem (100) nach einem der Ansprüche 1 bis 11, ferner umfassend:
eine Pumpe (13), die eingerichtet ist, das Erwärmungsmedium zum Erwärmungs-Wärmetauscher (2) zu senden, wobei die Steuerungseinrichtung (30, 32) eingerichtet ist, die Pumpe (13) zu betreiben, so dass eine Strömungsrate des zum Erwärmungs-Wärmetauscher (2) gesendeten Erwärmungsmediums nicht mehr ist als eine vorherbestimmte maximale Strömungsrate im Kondensat-Entfernungsbetrieb.

13. Wärmepumpensystem (100) nach einem der Ansprüche 1 bis 11, ferner umfassend:
eine Pumpe (13), die eingerichtet ist, das Erwärmungsmedium zum Erwärmungs-Wärmetauscher (2) zu senden; und
eine Außenlufttemperaturerfassungseinrichtung (12), die eingerichtet ist, eine Außenlufttemperatur zu erfassen, wobei
die Steuerungseinrichtung (30, 32) eingerichtet ist, eine Strömungsrate des zum Erwärmungs-Wärmetauscher (2) gesendeten Erwärmungsmediums zu bestimmen gemäß der Außenlufttemperatur im Kondensat-Entfernungsbetrieb.

14. Wärmepumpensystem (100) nach einem der Ansprüche 1 bis 11, ferner umfassend:
eine Pumpe (13), die eingerichtet ist, das Erwärmungsmedium zum Erwärmungs-Wärmetauscher (2) zu senden; und
eine Auslasstemperaturerfassungseinrichtung (8), die eingerichtet ist, eine Auslasstemperatur, die eine Temperatur des Erwärmungsmediums ist, das aus dem Erwärmungs-Wärmetauscher (2) herausströmt, zu erfassen, wobei
die Steuerungseinrichtung (30, 32) eingerichtet ist, eine Strömungsrate des zum Erwärmungs-Wärmetauscher (2) gesendeten Erwärmungsmediums zu bestimmen gemäß der Auslasstemperatur im Kondensat-Entfernungsbetrieb.

15. Wärmepumpensystem (100) nach einem der Ansprüche 1 bis 14, wobei
die Steuerungseinrichtung (30, 32) eingerichtet ist, einen Kondensat-Entfernungsbetrieb durchzuführen nach einem Ablauf einer vorherbestimmten Zeit ab dem Stopp des Betriebs zum Erwärmen des Erwärmungsmediums durch Antreiben des Verdichters (1) und des Gebläses (7).

## Revendications

1. Système de pompe à chaleur (100) comprenant :
un compresseur (1) configuré pour comprimer un fluide frigorigène ;
un échangeur de chaleur de chauffage (2) configuré pour échanger de la chaleur entre le fluide frigorigène comprimé par le compresseur (1) et un milieu chauffant liquide ;
un dispositif de décompression (3) configuré pour décomprimer le fluide frigorigène ;
un évaporateur (4) configuré pour échanger de la chaleur entre le fluide frigorigène décomprimé par le dispositif de décompression (3) et l'air extérieur ;
un ventilateur (7) configuré pour souffler de l'air vers l'évaporateur (4) ; et
un dispositif de commande (30, 32) configuré pour commander des opérations du compresseur (1) et du ventilateur (7), **caractérisé en ce que**
le dispositif de commande (30, 32) est configuré pour réaliser une opération d'élimination de condensation pour éliminer une condensation de l'échangeur de chaleur de chauffage (2) dans laquelle le ventilateur (7) est arrêté et le compresseur (1) est mis en fonctionnement après arrêt d'une opération de chauffage du milieu chauffant par entraînement du compresseur (1) et du ventilateur (7).

2. Système de pompe à chaleur (100) selon la revendication 1, comprenant en outre :
un dispositif de détection de température de l'air extérieur (12) configuré pour détecter une température de l'air extérieur, dans lequel
le dispositif de commande (30, 32) est configuré pour déterminer une fréquence de fonctionnement à laquelle le compresseur (1) est mis en fonctionnement en fonction de la température de l'air extérieur dans l'opération d'élimination de condensation.

3. Système de pompe à chaleur (100) selon la revendication 2, dans lequel
le dispositif de commande (30, 32) est configuré pour déterminer la fréquence de fonctionnement de telle sorte que la fréquence de fonctionnement diminue de manière linéaire au fur et à mesure que la température de l'air extérieur augmente.

4. Système de pompe à chaleur (100) selon la revendication 2, dans lequel
le dispositif de commande (30, 32) est configuré pour déterminer la fréquence de fonctionnement de telle sorte que la fréquence de fonctionnement diminue progressivement au fur et à mesure que la température de l'air extérieur augmente.

5. Système de pompe à chaleur (100) selon l'une quelconque des revendications 1 à 4, dans lequel
le dispositif de commande (30, 32) est configuré pour terminer l'opération d'élimination de condensation lorsqu'un temps prédéterminé s'écoule après le début de l'opération d'élimination de condensation.

6. Système de pompe à chaleur (100) selon l'une quelconque des revendications 1 à 4, comprenant en outre :
un dispositif de détection de température de sortie d'évaporateur (10) configuré pour détecter une température de sortie d'évaporateur, à savoir une température du fluide frigorigène s'écoulant hors de l'évaporateur (4), dans lequel
le dispositif de commande (30, 32) est configuré pour terminer l'opération d'élimination de condensation dans un cas où la température de sortie d'évaporateur atteint une température limite prédéterminée.

7. Système de pompe à chaleur (100) selon l'une quelconque des revendications 1 à 4, comprenant en outre :
un dispositif de détection de température de sortie de compresseur (11) configuré pour détecter une température de sortie de compresseur, à savoir une température du fluide frigorigène s'écoulant hors du compresseur (1), dans lequel
le dispositif de commande (30, 32) est configuré pour terminer l'opération d'élimination de condensation dans un cas où la température de sortie de compresseur atteint une température limite prédéterminée.

8. Système de pompe à chaleur (100) selon l'une quelconque des revendications 1 à 4, comprenant en outre :
un dispositif de détection de courant (14) configuré pour détecter une valeur de courant du compresseur (1), dans lequel
le dispositif de commande (30, 32) est configuré pour terminer l'opération d'élimination de condensation dans un cas où la valeur de courant atteint une valeur de courant limite prédéterminée.

9. Système de pompe à chaleur (100) selon l'une quelconque des revendications 1 à 4, comprenant en outre :
un dispositif de détection de température de sortie (8) configuré pour détecter une température de sortie, à savoir une température du milieu chauffant s'écoulant hors de l'échangeur de chaleur de chauffage (2), dans lequel
le dispositif de commande (30, 32) est configuré pour terminer l'opération d'élimination de condensation dans un cas où la température de sortie atteint une température limite prédéterminée.

10. Système de pompe à chaleur (100) selon l'une quelconque des revendications 1 à 9, dans lequel
le dispositif de commande (30, 32) est configuré pour ouvrir le dispositif de décompression (3) de telle sorte qu'une ouverture du dispositif de décompression (3) n'est pas inférieure à une ouverture minimale prédéterminée dans l'opération d'élimination de condensation.

11. Système de pompe à chaleur (100) selon l'une quelconque des revendications 1 à 9, comprenant en outre :
un dispositif de détection de température de l'air extérieur (12) configuré pour détecter une température de l'air extérieur, dans lequel
le dispositif de commande (30, 32) est configuré pour déterminer une ouverture du dispositif de décompression (3) en fonction de la température de l'air extérieur dans l'opération d'élimination de condensation.

12. Système de pompe à chaleur (100) selon l'une quelconque des revendications 1 à 11, comprenant en outre :
une pompe (13) configurée pour envoyer le milieu chauffant à l'échangeur de chaleur de chauffage (2), dans lequel
le dispositif de commande (30, 32) est configuré pour actionner la pompe (13) de telle sorte qu'un débit du milieu chauffant envoyé à l'échangeur de chaleur de chauffage (2) ne dépasse pas un débit maximal prédéterminé dans l'opération d'élimination de condensation.

13. Système de pompe à chaleur (100) selon l'une quelconque des revendications 1 à 11, comprenant en outre :
une pompe (13) configurée pour envoyer le milieu chauffant à l'échangeur de chaleur de chauffage (2) ; et
un dispositif de détection de température de l'air extérieur (12) configuré pour détecter une température de l'air extérieur, dans lequel
le dispositif de commande (30, 32) est configuré pour déterminer un débit du milieu chauffant envoyé à l'échangeur de chaleur de chauffage (2) en fonction de la température de l'air extérieur dans l'opération d'élimination de condensation.

14. Système de pompe à chaleur (100) selon l'une quelconque des revendications 1 à 11, comprenant en outre :
une pompe (13) configurée pour envoyer le milieu chauffant à l'échangeur de chaleur de chauffage (2) ; et
un dispositif de détection de température de sortie (8) configuré pour détecter une température de sortie, à savoir une température du milieu chauffant s'écoulant hors de l'échangeur de chaleur de chauffage (2), dans lequel
le dispositif de commande (30, 32) est configuré pour déterminer un débit du milieu chauffant envoyé à l'échangeur de chaleur de chauffage (2) en fonction de la température de sortie dans l'opération d'élimination de condensation.

15. Système de pompe à chaleur (100) selon l'une quelconque des revendications 1 à 14, dans lequel
le dispositif de commande (30, 32) est configuré pour réaliser l'opération d'élimination de condensation après un écoulement d'un temps prédéterminé à partir de l'arrêt de l'opération de chauffage du milieu chauffant par entraînement du compresseur (1) et du ventilateur (7).
